# EUROPEAN PATENT SPECIFICATION

(11) **EP 3 872 364 B1**
(45) Date of publication and mention of the grant of the patent: **06.08.2025**
(21) Application number: 21159471.8
(22) Date of filing: 26.02.2021
(51) Int. Cl.: F16G 13/12, F16G 15/02, F16G 15/12

(54) **JOINING ELEMENT FOR CHAINS**
VERBINDUNGSELEMENT FÜR KETTEN
ÉLÉMENT DE LIAISON POUR CHAÎNES

(30) Priority: 26.02.2020 IT 202000003949
(43) Date of publication of application: 01.09.2021
(73) Proprietor: CAME S.p.A., 31030 Dosson di Casier (TV) (IT)
(72) Inventor: GUERRA, Massimo, 30173 Favaro Veneto (IT); GROSSO, Michele, 31030 Casier (IT)
(74) Representative: Savi, Massimiliano

(56) References cited:
- GB-A- 191 104 674
- US-A- 1 254 652
- US-A- 375 045

## Description

### FIELD OF THE INVENTION

The present invention relates to a joining element for chains, and in particular a joining element for Genovese chains.

In greater detail, the present invention relates to a joining element also known as "false link", to be employed when the chain is to be cut and then closed again to modify the overall length thereof.

The present invention is applied in various fields and in particular in all those fields where chains, and in greater detail, Genovese chains, are employed.

An example of use of the Genovese chain is for the transmission of movement of a geared motor. In particular, the geared motor may be used to automate sectional doors. This application may be at the residential, condominium or industrial level.

### BACKGROUND ART

It is known in the art to use joining links (or joining elements) to modify and adapt the length of chains.

In particular, joints and joining links are available on the market, which are adapted to join the two ends of the chain after the cut to adjust the length of the chain or to replace damaged links.

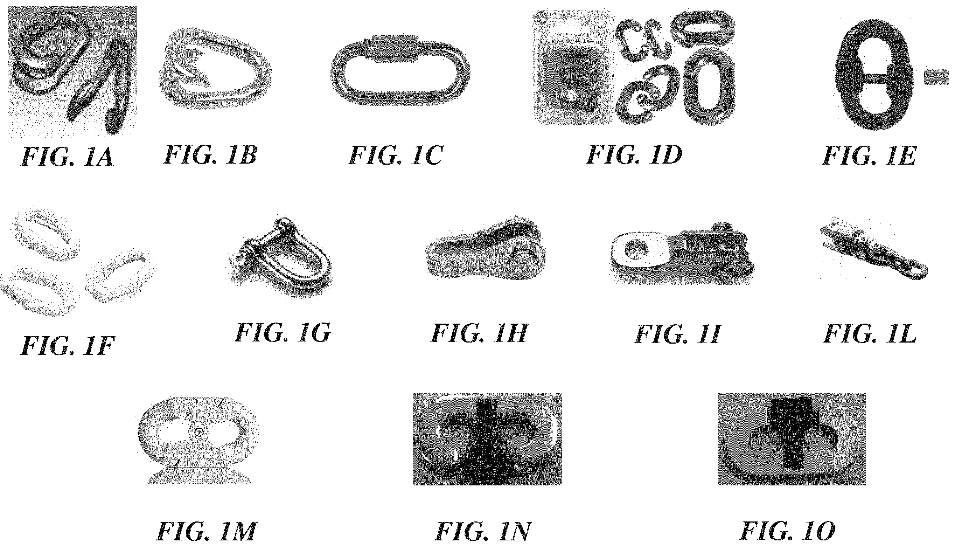

Figures 1A to 1O show different joining links or quick joints for various types of chains on the market.

For example, Figure 1D shows a false link for calibrated chains, Figure 1F shows joining rings for plastic chains, while Figures 1G to 1O show various embodiments of joints for chains.

Due to the shape thereof, some of these joining elements make the chains to which they are applied unusable for transmitting motion to a pulley.

Patent document US1254652A discloses an example of chain ring including an S-shaped section; patent document US375045 discloses another example of split links for joining pieces of a chain, and patent document GB04674 discloses another example of split chain link.

### SUMMARY OF THE INVENTION

It is the object of the present invention to make a joining element for chains to be used when the chain is to be cut to modify the length thereof.

It is another object of the present invention to make a joining element which is easy to use, and which allows using chains without limitations, for example for transmitting the motion to a pulley.

During the installation or repair of movement systems, for example of doors or rolling shutters, there may be a need to replace or modify the length of the transmission chains to adapt them to the specific installation. Here, there is a need to be able to rejoin the two free ends in a simple and quick manner with an element which may be used without limitations, for example with pulleys or gear wheels.

The present invention relates to a joining element for chain in the shape of a brise ring shaped to match the shape and sizes of a link of the chain.

In particular, in a first embodiment, the joining element is made with a rectangular section bar wound in helical manner to form two overlapping oval half-rings placed side-by-side.

In an alternative embodiment, the joining element is made with a circular section rod wound in helical manner to form two overlapping oval half-rings placed side-by-side.

Therefore, in the preferred embodiments, the joining element comprises two overlapping oval half-rings made of rigid metal placed side-by-side which are joined to each other by a connecting portion. In greater detail, the oval half-rings are each formed by a first semicircular portion and a second semicircular portion joined to each other at an end by a linear middle portion, and in which said joining element provides a connecting portion which joins the free ends of the two opposite semicircular portions of the two oval half-rings.

The joining element in various embodiments comprises a first semicircular portion connected to a first linear middle portion connected at the other end to a second semicircular portion which in turn is connected to a connecting portion, in which the connecting portion is connected at the other end to a third semicircular portion which is spaced apart from and faces the first semicircular portion, and the third semicircular portion is connected to a second linear middle portion facing the first linear middle portion and in turn is connected to a fourth semicircular portion which is spaced apart from and faces the second semicircular portion.

In various embodiments, the connecting portion comprises a first linear portion, an S-shaped middle portion and a second linear portion, wherein the S-shaped middle portion connects and joins the linear portions and to each other.

In alternative embodiments, the connecting portion is linear and interposed between the second semicircular portion and the third semicircular portion, and is parallel to and spaced apart from the linear middle portions.

In various embodiments, the connecting portion has a curved S-shaped outline and is directly interposed between the second semicircular portion and the third semicircular portion.

In further embodiments, the connecting portion has an oblique outline with respect to the middle linear portions and is interposed transversely between the second semicircular portion and the third semicircular portion.

In various embodiments, the joining element also comprises a first linear end portion connected to the first semicircular portion and a second linear end portion connected to the fourth semicircular portion.

Preferably, the first linear end portion and the second linear end portion terminate with a joined portion. In various embodiments, the joined portion is slightly tapered and rounded to facilitate the insertion of the link of the chain into the joining element.

In certain embodiments, the joining element is made starting from a single piece which is bent and shaped to obtain the desired shape. In a different manner, in other embodiments, the joining element is made of several components welded to one another.

### BRIEF DESCRIPTION OF THE DRAWINGS

Further features and advantages of the invention will become apparent from the following description provided by way of a non-limiting example, with the aid of the figures shown in the accompanying drawings, in which:
- Figures 1A to 1O show examples of joining links currently available,
- Figure 2 shows examples of brise rings used as key rings,
- Figures 3A to 3D show various embodiments of the joining element according to the present invention,
- Figure 4A shows an example of use of the joining element shown in Figure 3C,
- Figure 4B shows an enlarged view of the detail of the chain in the joining point,
- Figure 5 shows an example of use of the joining element according to the present invention,
- Figures 6A to 6C show three different steps of the joining operation of a chain,
- Figure 7 shows a winch which uses a chain with a joining element according to the present invention, and
- Figures 8A to 8B show a pulley and a pulley with chain and joining element according to the present invention.

The parts according to the present description have been depicted in the drawings, where appropriate, with conventional symbols, showing only those specific details which are pertinent to the understanding of the embodiments of the present invention, so as not to highlight details which will be immediately apparent to those skilled in the art, with reference to the description provided below.

### DETAILED DESCRIPTION OF THE INVENTION

The present invention relates to a joining element for chains, in particular Genovese chains, to be used when the chains are to be cut and then closed again to adjust the length thereof.

The solution herein proposed provides using a modified brise ring as joining element.

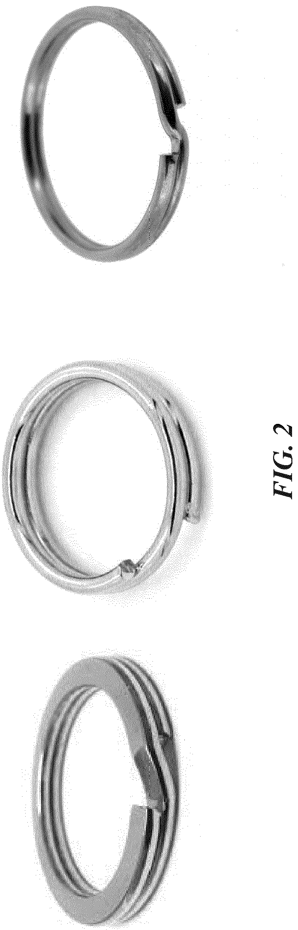

The brise rings shown in Figure 2 are known in the art and are usually used as key rings or as joining elements for necklaces or bracelets in a jeweler's craft.

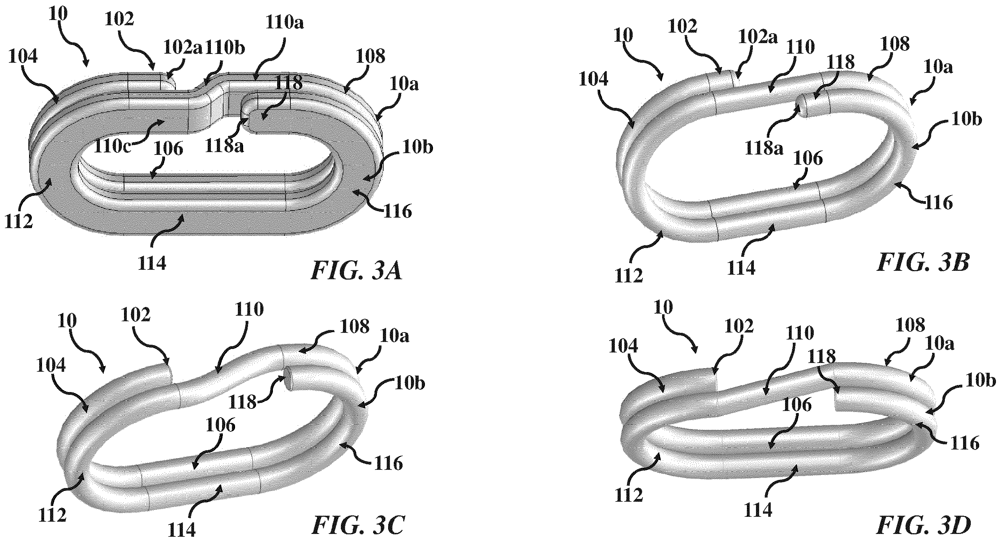

Figures 3 show some examples of joining elements 10 shaped as a link of the chain, to be used as joining element for Genovese chains.

In particular, the joining element 10 has an oval shape which matches the shape of a link of the Genovese chain and has sizes comparable to the link of chain C to be closed after the excess links have been cut.

The present invention relates to a joining element for chain in the shape of a brise ring shaped to match the shape and sizes of a link of the chain.

In particular, in a first embodiment (Figure 3A), the joining element is made with a rectangular section bar wound in helical manner to form two overlapping oval half-rings placed side-by-side.

In an alternative embodiment (Figure 3B, 3C and 3D), the joining element is made with a circular section rod wound in helical manner to form two overlapping oval half-rings placed side-by-side.

Therefore, in the preferred embodiments, the joining element 10 comprises two overlapping oval half-rings 10a and 10b made of rigid metal placed side-by-side which are joined to each other by a connecting portion 110. In greater detail, the oval half-rings 10a and 10b are each formed by a first semicircular portion 104 and 112 and a second semicircular portion 108 and 116 joined to each other at an end by a linear middle portion 106 and 114, and in which the joining element 10 provides a connecting portion 110 which joins the free ends of the two opposite semicircular portions 108 and 112 of the two oval half-rings 10a, 10b.

The joining element in various embodiments comprises a first semicircular portion 104 connected to a first linear middle portion 106 connected at the other end to a second semicircular portion 108 which in turn is connected to the connecting portion 110, in which the connecting portion 110 is connected at the other end to a third semicircular portion 112 which is spaced apart from and faces the first semicircular portion 104, and the third semicircular portion 112 is connected to a second linear middle portion 114 facing the first linear middle portion 106 and in turn is connected to a fourth semicircular portion 116 which is spaced apart from and faces the second semicircular portion 108.

In various embodiments, the connecting portion 100 comprises a first linear portion 110a, an S-shaped middle portion 110b and a second linear portion 110c, in which the S-shaped middle portion 110b connects and joins the linear portions 110a and 110b to each other.

In alternative embodiments, the connecting portion 110 is linear and is interposed between the second semicircular portion 108 and the third semicircular portion 112, and is parallel to and spaced apart from the linear middle portions 106 and 114.

In various embodiments, the connecting portion 110 has a curved S-shaped outline and is directly interposed between the second semicircular portion 108 and the third semicircular portion 112.

In further embodiments, the connecting portion 110 has an oblique outline with respect to the middle linear portions 106 and 114 and is interposed transversely between the second semicircular portion 108 and the third semicircular portion 112.

In various embodiments, the joining element 10 also comprises a first linear end portion 102 connected to the first semicircular portion 104 and a second linear end portion 118 connected to the fourth semicircular portion 116.

Preferably, the first linear end portion 102 and the second linear end portion 118 terminate with a joined portion 102a and 118a. In various embodiments, the connecting portions 102a and 118a are slightly tapered and rounded to facilitate the insertion of the link of the chain into the joining element.

In certain embodiments, the joining element 10 is made starting from a single piece which is bent and shaped to obtain the desired shape. In a different manner, in other embodiments, the joining element 10 is made of several components welded to one another.

Figure 3A shows a first embodiment of the shaped brise ring 10 made with a rectangular section bar, which gives ring 10 a flattened outline.

In particular, the joining element 10 is a double oval half-ring made of rigid metal in the shape of a spring. In the embodiment shown in Figure 3A, the spring is formed by a rectangular section bar wound in helical manner to form two overlapping oval half-rings 10 and 10b placed side-by-side.

The joining element 10 comprises a first linear end portion 102, followed by a first semicircular portion 104, which connects the first linear end portion 102 to a first linear middle portion 106. The first linear middle portion 106 is followed by a second semicircular portion 108 which in turn is connected to a connecting portion 110 between the two oval half-rings 10a, 10b.

In the embodiment shown in Figure 3A, the connecting portion 110 comprises a first linear portion 110a, an S-shaped middle portion 110b and a second linear portion 110c. The S-shaped middle portion 110b connects and joins the linear portions 110a and 110c to each other.

The connecting portion 110 is followed by a third semicircular portion 112 which is spaced apart from, and faces the first semicircular portion 104, in which the third semicircular portion 112 is connected at the free end thereof to a second linear middle portion 114 facing the first linear middle portion 106. Finally, there is a fourth semicircular portion 116 which is spaced apart from and faces the second semicircular portion 108 to which a second linear end portion 118 is connected.

The joining element 10 may be made starting from a single piece which is bent and shaped to obtain the shape shown in Figure 3A, or may be made of several components welded to one another. Alternatively, the joining element 10 may be molded.

In particular, in the embodiment in Figure 3A, there are two oval half-rings 10a and 10b, each formed by two semi-circular portions, the first 104 and the third 108 and the second 112 and the fourth 116, joined to one another by a first 106 and second linear middle portion 114, respectively. The connecting portion 110 joins the free ends of the two opposite semicircular portions 108 and 112 of the two oval half-rings 10a and 10b.

In the embodiment shown in Figure 3B, there is a joining element 10 with a circular section. In particular, the joining element 10 is a double oval half-ring made of rigid metal in the shape of a spring. In the embodiment shown in Figure 3B, the spring is formed by a circular section rod wound in helical manner to form two overlapping oval half-rings 10a and 10b placed side-by-side.

In this embodiment, the connecting portion 110 is linear and is interposed directly between the free ends of the second semicircular portion 108 and the third semicircular portion 112.

In particular, the connecting portion 110 is parallel to the linear middle portions 106 and 114 and is partially interposed between the first linear end portion 102 and the second linear end portion 118.

In the embodiment in Figure 3B, the first linear end portion 102 and the second linear end portion 118 terminate with a slightly tapered and rounded portion 102a and 118a to facilitate the insertion of the link of chain C into the joining element 10.

In the embodiment in Figure 3C, the spring is formed by a circular section rod wound in helical manner to form two overlapping oval half-rings 10a and 10b placed side-by-side. In this embodiment, the connecting portion 110 has a curved S-shaped outline and is directly interposed between the free ends of the second semicircular portion 108 and the third semicircular portion 112.

In particular, in the embodiment in Figure 3C, there are two oval half-rings 10a and 10b, each formed by two semi-circular portions joined to each other by a linear middle portion. The connecting portion 110 joins the two opposite semicircular portions of the two oval half-rings 10a and 10b.

Finally, in the embodiment in Figure 3D, the joining element 10 is formed by a circular section rod wound in helical manner to form two overlapping oval half-rings 10a and 10b placed side-by-side. In this embodiment, the connecting portion 110 has an oblique outline with respect to the linear portions and is directly interposed transversely between the second semicircular portion 108 and the third semicircular portion 112.

In all embodiments, the joining element 10 is shaped so as to reflect the same sizes of a link of chain C.

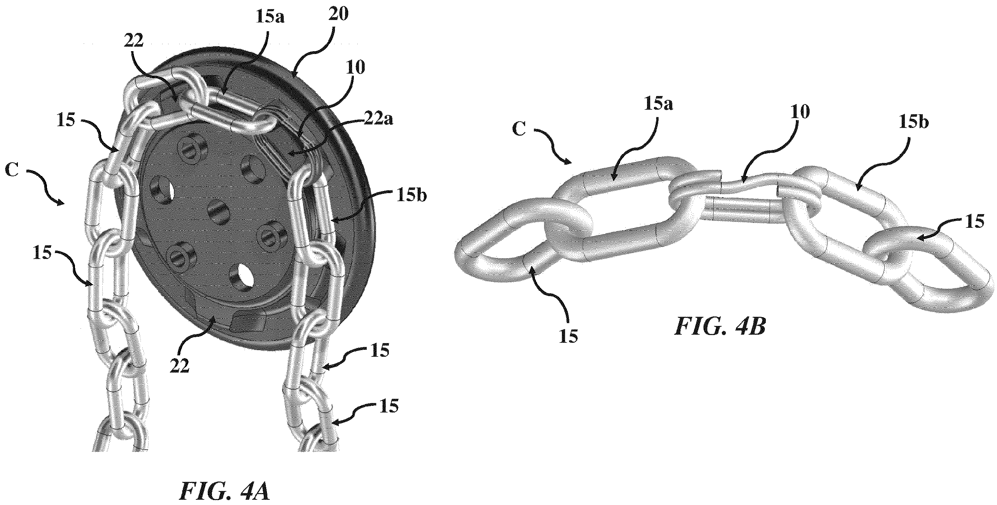

Figure 4A shows an example of use of the joining element 10 with a return pulley 20. In the example, the joining element 10 joins two regular links 15a and 15b of a chain. The joining element 10 acts as any link 15 of the chain and interacts with pulley 20 without any type of interference. The pulley has wedges 22 which are dragged by the chain. The guide wedges 22 are usually spaced apart so as to engage every second link.

As shown in Figure 4A, the joining element 10 replicates a regular link 15 and engages with the guide wedge 22a exactly as any other link 15 of the chain. In particular, the guide wedge is engaged in the through hole of the joining element 10.

In particular, in addition to having the advantage of being easy to use, the use of the joining element 10 to join the ends of a chain C allows moderate forces to be transmitted on return pulleys without hindering and affecting the operation.

Figure 4B shows a stretch of chain C with the joining element 10 which joins the two links 15a and 15b to each other. As shown, by virtue of the shape and size thereof, the joining element 10 adapts quite well to chain C and matches a regular link 15. In particular, once positioned, the joining element 10 takes on the same position and function as a regular link 15.

When using the joining element 10, it is coupled to the first of the two free ends, e.g. end 15a. To insert link 15a into the joining element 10, the first linear end portion 102 is moved away from the connecting portion 110 and link 15a is inserted and slid along the two oval rings until link 15a leaves the second linear end portion 118. At this point, link 15a is in the joining element 10. Then the same procedure just performed is repeated with the free end 15b. At the end of the operation, both links 15a and 15b are coupled in the joining element 10 to form a single chain.

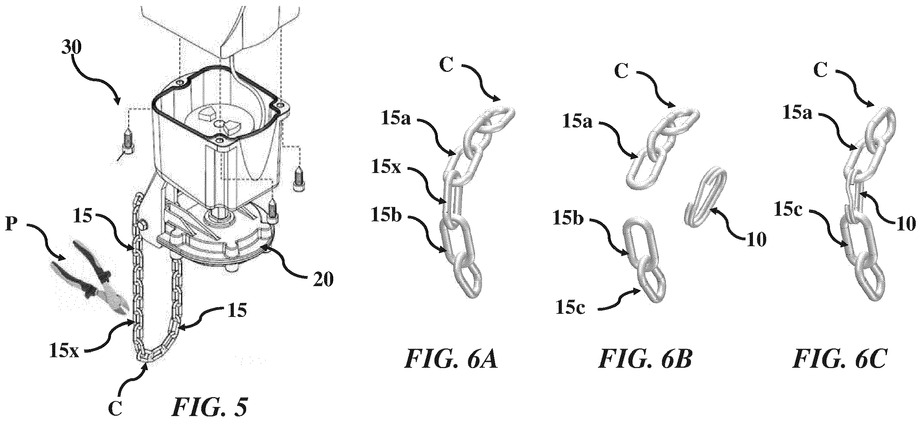

Figure 5 shows an example of employment of the joining element 10 according to the present invention.

During the installation of a winch 30 with chain movement, it becomes necessary to adjust the length of chain C. In particular, a link 15x of chain C is cut using a pincer P and the joining element 10 is used to join the two free ends 15a and 15b of chain C.

With reference to Figures 6, it shows the sequence of adapting the length of chain C. In particular, Figure 6A shows chain C, highlighting link 15x which is cut to open chain C. Figure 6B shows the two free ends 15a and 15b of chain C after the removal of link 15x. Link 15b of the chain is to be eliminated to shorten chain C. Then link 15b is also cut and Figure 6C shows the new free end which becomes the next link 15c. At this point, the two free ends 15a and 15c of chain C are rejoined with the joining element 10, thus obtaining a reduction in length of chain C.

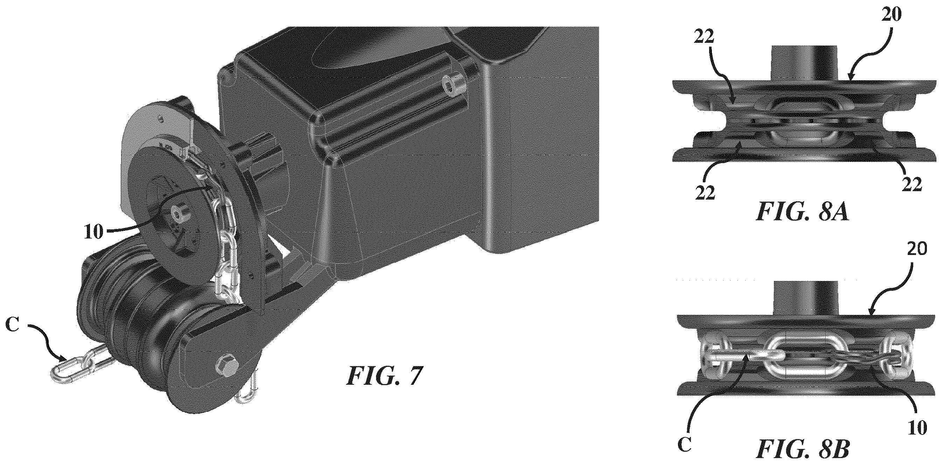

Figure 7 shows an example of use of the joining element 10 according to the present invention.

In particular, a winch comprises a return pulley 20 on which a chain C is engaged.

Figure 8A shows pulley 20 and Figure 8B shows pulley 20 with chain C engaged. As shown, the joining element 10 is perfectly adapted and engages without problem with the guide wedges 22 of pulley 20.

The joints usually sold (shown in Figures 1A to 1O) cannot be implemented for transmitting motion to a pulley (with the exception of those shown in Figure 1A; 1D AND 1M) due to the shape thereof.

With the solution of the joining element 10 suitably sized, shaped pulleys matching the outline of the chain may be moved, such as for example implemented in the application of the winch shown in Figure 7.

Joining elements 10 having various shapes and sizes may be provided so that the joining element 10 simulates the shape and sizes of a link of the chain which is to be cut and rejoined.

Obviously, the principle of the invention being understood, the building details and embodiments may be widely varied with respect to what is described and disclosed by way of non-limiting example, without departing from the scope of the present invention.

## Claims

1. A joining element (10) for a chain (C), in the shape of a brise ring (10) shaped to match the shape and sizes of a link of said chain (C) wherein said joining element (10):
comprises two overlapping oval half-rings (10a, 10b) made of rigid metal placed side-by-side which are joined to each other by a connecting portion (110) and are each formed by two semicircular portions joined to each other at an end by a linear middle portion,
comprises a connecting portion (110) which joins the free ends of the two opposite semicircular portions (108, 112) of the two oval half-rings (10a, 10b), wherein a first semicircular portion (104) is connected to a first linear middle portion (106), said first linear middle portion (106) is connected at the other end to a second semicircular portion (108) which in turn is connected to a connecting portion (110), wherein said connecting portion (110) is connected at the other end to a third semicircular portion (112) which is spaced apart from and faces the first semicircular portion (104), said third semicircular portion (112) is connected to a second linear middle portion (114) facing the first linear middle portion (106), said second linear middle portion (114) is connected to a fourth semicircular portion (116) which is spaced apart from, and faces the second semicircular portion (108), **characterized in that**
- the connecting portion (110) is linear and is directly interposed between the second semicircular portion (108) and the third semicircular portion (112), and is parallel to and spaced apart from the linear middle portions (106, 114), or
- the connecting portion (110) has a curved S-shaped outline and is directly interposed between the second semicircular portion (108) and the third semicircular portion (112), or
- the connecting portion (110) has an oblique outline with respect to the middle linear portions (106, 114) and is interposed transversely between the second semicircular portion (108) and the third semicircular portion (112).

2. A joining element (10) for chain (C) according to claim 1, wherein said joining element (10) is made with a rectangular section bar wound in helical manner to form two overlapping oval half-rings (10a, 10b) placed side-by-side.

3. A joining element (10) for chain (C) according to claim 1, wherein said joining element (10) is made with a circular section rod wound in helical manner to form two overlapping oval half-rings (10a, 10b) placed side-by-side.

4. A joining element (10) for chain (C) according to any one of claims 1 to 3, wherein said joining element (10) also comprises a first linear end portion (102) connected to said first semicircular portion (104) and a second linear end portion (118) connected to said fourth semicircular portion (116).

5. A joining element (10) for chain (C) according to claim 1, wherein said first linear end portion (102) and said second linear end portion (118) terminate with a joined portion (102a, 118a).

6. A joining element (10) for chain (C) according to claim 1, wherein said joined portion (102a, 118a) is slightly tapered and rounded to facilitate the insertion of the link of the chain (C) into the joining element (10).

7. A joining element (10) for chain (C) according to any one of the preceding claims, wherein said joining element (10) is made starting from a single piece which is bent and shaped to obtain the desired shape.

8. A joining element (10) for chain (C) according to any one of the preceding claims, wherein said joining element (10) is made of several components welded to one another.

## Patentansprüche

1. Verbindungselement (10) für eine Kette (C) in der Form eines Splintrings (10), der so geformt ist, dass er der Form und Größe eines Glieds der Kette (C) entspricht, wobei das Verbindungselement (10):
zwei überlappende, nebeneinander angeordnete ovale Halbringe (10a, 10b) aus starrem Metall umfasst, die durch einen Verbindungsabschnitt (110) miteinander verbunden sind und jeweils aus zwei halbkreisförmigen Abschnitten gebildet sind, die an einem Ende durch einen linearen Mittelabschnitt miteinander verbunden sind,
einen Verbindungsabschnitt (110) umfasst, der die freien Enden der zwei gegenüberliegenden halbkreisförmigen Abschnitte (108, 112) der zwei ovalen Halbringe (10a, 10b) verbindet,
wobei ein erster halbkreisförmiger Abschnitt (104) mit einem ersten linearen Mittelabschnitt (106) verbunden ist, der erste lineare Mittelabschnitt (106) am anderen Ende mit einem zweiten halbkreisförmigen Abschnitt (108) verbunden ist, der wiederum mit einem Verbindungsabschnitt (110) verbunden ist, wobei der Verbindungsabschnitt (110) am anderen Ende mit einem dritten halbkreisförmigen Abschnitt (112) verbunden ist, der von dem ersten halbkreisförmigen Abschnitt (104) beabstandet und diesem zugewandt ist, der dritte halbkreisförmige Abschnitt (112) mit einem zweiten linearen Mittelabschnitt (114) verbunden ist, der dem ersten linearen Mittelabschnitt (106) zugewandt ist, der zweite lineare Mittelabschnitt (114) mit einem vierten halbkreisförmigen Abschnitt (116) verbunden ist, der von dem zweiten halbkreisförmigen Abschnitt (108) beabstandet und diesem zugewandt ist,
**dadurch gekennzeichnet, dass**
- der Verbindungsabschnitt (110) linear ist und direkt zwischen dem zweiten halbkreisförmigen Abschnitt (108) und dem dritten halbkreisförmigen Abschnitt (112) angeordnet ist und parallel zu den linearen Mittelabschnitten (106, 114) und von diesen beabstandet ist, oder
- der Verbindungsabschnitt (110) einen gekrümmten S-förmigen Umriss aufweist und direkt zwischen dem zweiten halbkreisförmigen Abschnitt (108) und dem dritten halbkreisförmigen Abschnitt (112) angeordnet ist, oder
- der Verbindungsabschnitt (110) einen schrägen Umriss in Bezug auf die linearen Mittelabschnitte (106, 114) aufweist und quer zwischen dem zweiten halbkreisförmigen Abschnitt (108) und dem dritten halbkreisförmigen Abschnitt (112) angeordnet ist.

2. Verbindungselement (10) für eine Kette (C) nach Anspruch 1, wobei das Verbindungselement (10) aus einem Stab mit rechteckigem Querschnitt besteht, der spiralförmig gewickelt ist, um zwei überlappende, ovale Halbringe (10a, 10b) zu bilden, die nebeneinander angeordnet sind.

3. Verbindungselement (10) für eine Kette (C) nach Anspruch 1, wobei das Verbindungselement (10) aus einer Stange mit kreisförmigem Querschnitt besteht, die spiralförmig gewickelt ist, um zwei überlappende, ovale Halbringe (10a, 10b) zu bilden, die nebeneinander angeordnet sind.

4. Verbindungselement (10) für eine Kette (C) nach einem der Ansprüche 1 bis 3, wobei das Verbindungselement (10) auch einen ersten linearen Endabschnitt (102), der mit dem ersten halbkreisförmigen Abschnitt (104) verbunden ist, und einen zweiten linearen Endabschnitt (118) umfasst, der mit dem vierten halbkreisförmigen Abschnitt (116) verbunden ist.

5. Verbindungselement (10) für eine Kette (C) nach Anspruch 1, wobei der erste lineare Endabschnitt (102) und der zweite lineare Endabschnitt (118) mit einem verbundenen Abschnitt (102a, 118a) enden.

6. Verbindungselement (10) für eine Kette (C) nach Anspruch 1, wobei der verbundene Abschnitt (102a, 118a) leicht konisch und abgerundet ist, um das Einsetzen des Glieds der Kette (C) in das Verbindungselement (10) zu erleichtern.

7. Verbindungselement (10) für eine Kette (C) nach einem der vorhergehenden Ansprüche, wobei das Verbindungselement (10) aus einem einzigen Stück hergestellt ist, das gebogen und geformt wird, um die gewünschte Form zu erhalten.

8. Verbindungselement (10) für eine Kette (C) nach einem der vorhergehenden Ansprüche, wobei das Verbindungselement (10) aus mehreren miteinander verschweißten Komponenten besteht.

## Revendications

1. Elément de jonction (10) pour une chaîne (C), sous la forme d'un anneau brisé (10) façonné pour correspondre à la forme et aux tailles d'un maillon de ladite chaîne (C), dans lequel ledit élément de jonction (10) :
comprend deux demi-anneaux ovales se chevauchant (10a, 10b) en métal rigide placés côte à côte qui sont reliés l'un à l'autre par une portion de liaison (110) et sont chacun formés par deux portions semi-circulaires reliées l'une à l'autre à une extrémité par une portion médiane linéaire,
comprend une portion de liaison (110) qui relie les extrémités libres des deux portions semi-circulaires opposées (108, 112) des deux demi-anneaux ovales (10a, 10b),
dans lequel une première portion semi-circulaire (104) est reliée à une première portion médiane linéaire (106), ladite première portion médiane linéaire (106) est reliée à l'autre extrémité à une deuxième portion semi-circulaire (108) qui à son tour est reliée à une portion de liaison (110), dans lequel ladite portion de liaison (110) est reliée à l'autre extrémité à une troisième portion semi-circulaire (112) qui est espacée de la première portion semi-circulaire (104) et fait face à celle-ci, ladite troisième portion semi-circulaire (112) est reliée à une deuxième portion médiane linéaire (114) faisant face à la première portion médiane linéaire (106), ladite deuxième portion médiane linéaire (114) est reliée à une quatrième portion semi-circulaire (116) qui est espacée de la deuxième portion semi-circulaire (108) et fait face à celle-ci, **caractérisé en ce que**
- la portion de liaison (110) est linéaire et directement interposée entre la deuxième portion semi-circulaire (108) et la troisième portion semi-circulaire (112), et parallèle à, et espacée des portions médianes linéaires (106, 114), ou
- la portion de liaison (110) a un contour incurvé en forme de S et est directement interposée entre la deuxième portion semi-circulaire (108) et la troisième portion semi-circulaire (112), ou
- la portion de liaison (110) a un contour oblique par rapport aux portions linéaires médianes (106, 114) et elle est interposée transversalement entre la deuxième portion semi-circulaire (108) et la troisième portion semi-circulaire (112).

2. Elément de jonction (10) pour chaîne (C) selon la revendication 1, dans lequel ledit élément de jonction (10) est réalisé avec une barre de section rectangulaire enroulée de manière hélicoïdale pour former deux demi-anneaux ovales se chevauchant (10a, 10b) placés côte à côte.

3. Elément de jonction (10) pour chaîne (C) selon la revendication 1, dans lequel ledit élément de jonction (10) est réalisé avec une tige de section circulaire enroulée de manière hélicoïdale pour former deux demi-anneaux ovales se chevauchant (10a, 10b) placés côte à côte.

4. Elément de jonction (10) pour chaîne (C) selon l'une quelconque des revendications 1 à 3, dans lequel ledit élément de jonction (10) comprend également une première portion d'extrémité linéaire (102) reliée à ladite première portion semi-circulaire (104) et une deuxième portion d'extrémité linéaire (118) reliée à ladite quatrième portion semi-circulaire (116).

5. Elément de jonction (10) pour chaîne (C) selon la revendication 1, dans lequel ladite première portion d'extrémité linéaire (102) et ladite deuxième portion d'extrémité linéaire (118) se terminent par une portion jointe (102a, 118a).

6. Elément de jonction (10) pour chaîne (C) selon la revendication 1, dans lequel ladite portion jointe (102a, 118a) est légèrement effilée et arrondie pour faciliter l'insertion du maillon de la chaîne (C) dans l'élément de jonction (10).

7. Elément de jonction (10) pour chaîne (C) selon l'une quelconque des revendications précédentes, dans lequel ledit élément de jonction (10) est fabriqué à partir d'une seule pièce qui est pliée et formée pour obtenir la forme souhaitée.

8. Elément de jonction (10) pour chaîne (C) selon l'une quelconque des revendications précédentes, dans lequel ledit élément de jonction (10) est constitué de plusieurs composants soudés les uns aux autres.
